# EUROPEAN PATENT APPLICATION

(11) **EP 1 837 170 A1**
(43) Date of publication of application: **26.09.2007**
(21) Application number: 07104601.5
(22) Date of filing: 21.03.2007
(51) Int. Cl.: B31D 1/02, B23K 26/08

(54) **A label production apparatus**

(30) Priority: 22.03.2006 GB 0605694
(71) Applicant: A B Graphic International Limited, Middleton-on-the-Wolds, East Yorkshire YO25 9UQ (GB)
(72) Inventor: Lawson, David Millfield House, Driffield East Yorkshire YO25 9UQ (GB)
(74) Representative: Walker, Antony James Alexander

(57) **Abstract**

A label forming apparatus for forming discrete adhesive labels from a continuous strip of label stock (12) consisting of a self-adhesive label web (17) and a carrier sheet (18). The apparatus comprises laser cutting means (23), means (16) for de-laminating the self-adhesive label web (17) from the carrier sheet (18) and directing the label web (17) past the laser cutting means (23) to cut a label out of the label web (17), and means (28) for re-laminating the cut label web (17) to a carrier sheet. The apparatus further comprises label web support means (22) defining a surface for supporting the label web (17) as it passes the laser cutting means (23), and drive means for moving the support means (22) at the same speed as the label web (17).

## Description

The present invention relates generally to adhesive labels and more particularly to a label production apparatus for forming discrete self-adhesive labels from a continuous label stock using a laser.

Adhesive labels are typically manufactured from rolls or strips of continuous label stock. The label stock comprises a label web or face stock having a front surface, which is usually printed on, and an adhesive coated rear surface which allows the labels to be attached to product. Underlying the self-adhesive label web is a carrier sheet or release liner. The carrier sheet is provided with a low adhesion surface contacting the label web which allows the label web to separate easily from the carrier sheet. This is important during the production of the self-adhesive labels from the label web as will be explained hereinbelow, and also facilitates removal of the finished self-adhesive labels from the carrier sheet for attachment to the products to be labelled. The inclusion of the carrier sheet prevents contamination of the adhesive surface, allows the label stock to be handled without accidental adherence to adjacent surfaces and provides structural integrity.

It is known to etch adhesive labels from a label web using a laser (hereinafter the term "etch"is used to signify laser ablation or vaporisation of the label web). However, one disadvantage of using a laser to etch the labels is that the laser beam will typically etch not only the label web, but also the carrier sheet underlying the etched region of the label web. Damage to the carrier sheet can compromise the structural integrity of the label stock and lead to tearing and breakage. When tearing or breakage occurs when the label stock is in use in a label applicator the operation of the label applicator must be interrupted while the damaged stock is removed and replaced. This results in lost production which is generally unacceptable.

To enable the production of self-adhesive labels from a label web without causing damage to the underlying carrier sheet it is known to separate the label web from the carrier sheet before the label web is etched by the laser. Following separation the carrier sheet is moved outside the beam path of the laser, thereby avoiding any possibility of laser damage being caused to the carrier sheet. The original carrier sheet is then reattached to the etch label web or the original carrier sheet may be discarded and a new carrier sheet applied to the etched label web.

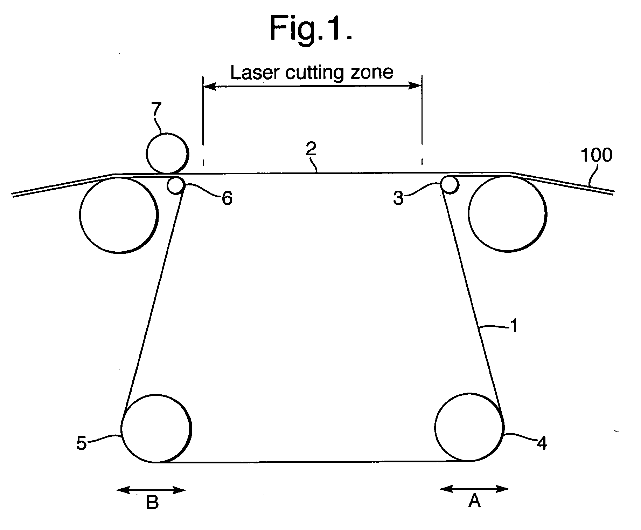

Fig. 1 is a schematic view of a conventional label production apparatus comprising a laser unit for cutting labels from a continuous label stock 100 consisting of a carrier sheet 1 and a self-adhesive label web 2. In very general terms this known apparatus comprises a first guide bar 1, a second guide bar 6, a pair of path rollers 4 and 5, and a tamp down roller 7. The region between the first and second guide bars 3 and 6 defines the laser cutting zone and a laser unit is located within this region for the purpose of cutting labels from the label web 1. The laser unit has not been shown for ease of illustration. The continuous label stock 100 is conveyed through the apparatus from right to left. At the first guide bar 3 the carrier sheet 1 is separated from the label web 2. The label web 2 is conveyed directly through the laser cutting zone and on to the second guide bar 6. As the label web 2 passes beyond the first guide bar 3 labels are cut from it and by the time the label web 2 reaches the second guide bar 6 it comprises cut labels supported in a waste matrix. The carrier sheet 1 is directed around the first guide bar 3 and away from the label web 2, The carrier sheet 1 continues around each of the path rollers 4 and 5, and is then directed back towards the second guide bar 6. The carrier sheet 1 passes around the second guide bar 6 where it re-joins the cut label web 2. The tamp down roller 7 is located opposite the guide bar 6 to tamp down the cut label web 2 onto the carrier sheet 1 and to ensure that each label is effectively re-laminated to the carrier sheet 1 over its full surface.

The position at which re-lamination occurs is critical. The relative positions of the forward path roller 5, the second guide bar 6 and the tamping down roller 7 can all be adjusted in the direction of arrow B to ensure that re-lamination occurs as soon as possible after the leading edge of each label has been cut in the label web. In a similar fashion, the relative positions of the rearward path roller 4 and the first guide bar 3 can all be adjusted in the direction of arrow B to ensure that de-lamination is delayed to a point that just clears the point of formation of the trailing edge of each label.

This conventional label production apparatus is unreliable in two significant respects. Firstly, the self-adhesive label web 2 is not supported as it passes between the first and second guide bars 3 and 6, through the laser cutting zone, with the result that the label web 2 can lose stability as labels are cut from it. This loss of stability adversely affects the accuracy with which labels can be cut from the label web 2. In order to maintain stability the label web 2 must be held in tension as it passes through the laser cutting zone. However, this creates its own problems in that the tension control during the de-lamination and re-lamination of the label web and the carrier sheet is critical to the quality of the finished product. High tension is important for keeping both the label web 2 and the carrier sheet 1 under control, and for ensuring separation around the first guide bar 3, but the label web 2 can become distorted under the strain whilst partially cut through. This distortion may result in an incorrect label shape and cutting problems because the surface of the label web is not in the required position relative to the cutting laser beam. Low tension in the label web 2 avoids tension related distortion, but then control of the label web 2 and of the carrier sheet 1 suffers and de-lamination is not as good because the label web 2 tends to follow the carrier sheet 1 around the guide bar 3 and the label web 2 ceases to be in the required position relative to the cutting laser beam.

The second problem is that re-lamination of the cut label web 2 to the carrier sheet 1 is not accurate enough to satisfy end user requirements.

It is an object of the present invention to provide a label production apparatus that obviates or at least substantially mitigates the problems of the prior art label production apparatus which have been identified and discussed hereinbefore.

According to the present invention there is provided a label forming apparatus for forming discrete adhesive labels from a continuous strip of label stock consisting of a self-adhesive label web and a carrier sheet, the apparatus comprising laser cutting means, means for de-laminating the self-adhesive label web from the carrier sheet, means for directing the label web past the laser cutting means to cut a label out of the label web, means for directing the carrier sheet away from the laser cutting means so that it is substantially unaffected thereby and means for re-laminating the cut label web either to the original carrier sheet or to a new carrier sheet, characterised in that the apparatus further comprises label web support means for supporting the label web as it passes the laser cutting means, and drive means for moving the support means at the same speed as the label web.

The moving support means supports the label web as it passes the laser cutting means ensuring that the stability of the label web is maintained throughout the cutting process. In addition, the support given to the label web by the moving support means makes it unnecessary to tension the label web between the de-lamination and re-lamination positions.

In one embodiment of the present invention the moving support means comprises a rotating drum the circumferential surface of which defines a label web carrying surface.

In another embodiment of the present invention the moving support means comprises a reciprocating platform which traverses back and forth past the laser cutting means. The reciprocating platform picks up the label web following the de-lamination position and supports it past the laser cutting means. After the web has been cut and prior to re-lamination the reciprocating platform disengages from the cut label web and returns to its initial position. This reciprocating action is carried out for each laser cutting operation.

In yet another embodiment of the present invention the moving support means comprises a continuous conveyor belt defining a label web carrying surface which moves past the laser cutting means.

Preferably, the moving support means comprises vacuum means for producing a vacuum over the label web carrying surface thereof. The vacuum at the label web carrying surface serves to secure the label web thereto whilst labels are cut from it, thus ensuring that the stability and relative position of the label web remain constant throughout.

Preferably, the self-adhesive label web is supported on the moving support means with the front surface thereof in contact with the label web carrying surface thereof and the self-adhesive side thereof facing towards the laser cutting means. This ensures that the label web does not adhere to the moving support means. It also gives rise to an improved product in that the cut edges of the labels are not visible when the label is viewed from the front surface thereof. In this regard, it should be understood that the laser causes the cut edges of a label to be chamfered. This can result in the edges of the label showing as a line around the label. By etching the self-adhesive label web through the adhesive side thereof, the chamfered edge lies on the adhesive side thereof and is invisible when the label is applied to a product.

Embodiments of the present invention will now be described, by way of example, with reference to the accompanying drawings, in which:
Fig. 1 is a schematic view of a conventional label cutting apparatus;
Fig. 2 is a schematic view of an embodiment of a label cutting apparatus according to the present invention in which the waste matrix is removed prior rewinding;
Fig. 3 is a schematic view of another embodiment of a label cutting apparatus according to the present invention in which the waste matrix is removed prior to re-laminating the etched label web and the carrier sheet; and
Fig. 4 is a schematic view of a laser unit etching a label from a label web supported on a rotating drum in accordance with the present invention and shows inset a detail of the etching action of the laser beam on the label web.

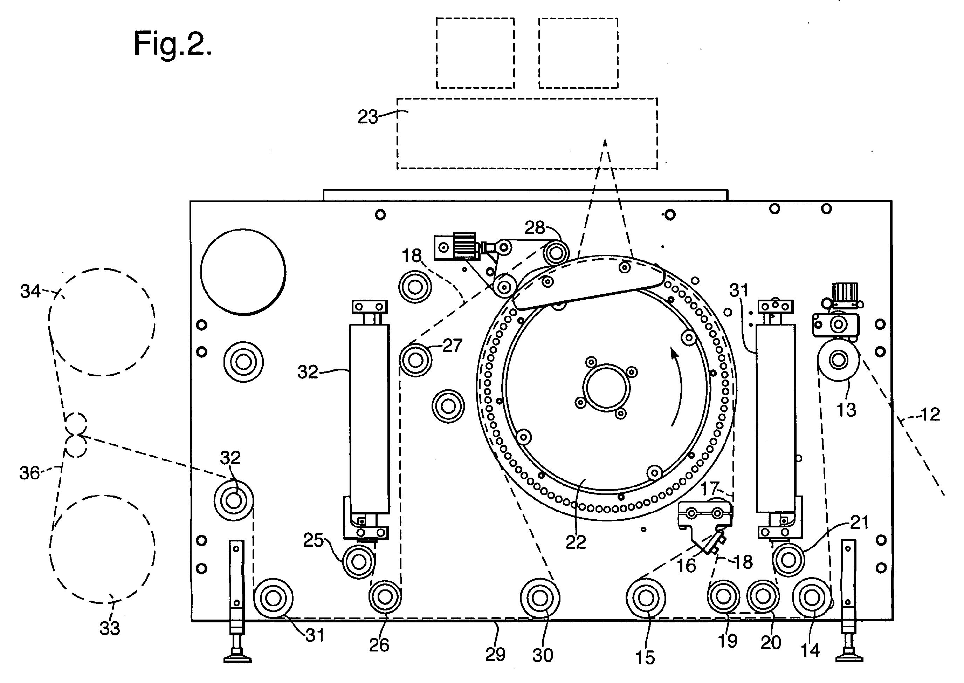

Referring to Fig. 2 of the drawings there is shown a label forming apparatus for producing discrete self-adhesive labels from a continuous strip of label stock consisting of a self-adhesive label web having a front surface, which is usually printed on, an adhesive rear surface, and a carrier sheet underlying and having one surface in contact with the adhesive surface of the self-adhesive label web. The label stock is input to the label forming apparatus on the right-hand side thereof and is shown as a broken line 12.

The continuous strip of label stock 12 passes around tensioning and guide rollers 13, 14 and 15 and over a "peel" plate 16 where the self-adhesive label web, indicated by a broken line 17, is separated from the carrier sheet, indicated by a broken line 18. The self-adhesive label web 17 continues upwardly past the "peel" plate 16 and over the outer circumferential surface of a rotating drum 22. A laser unit 23 is positioned opposite the rotating drum 22 to cut labels from the label web 17 as it passes. The speed of rotation of the rotating drum 22 exactly matches the transport speed of the label web 17. Moreover, the rotating drum 22 is associated with vacuum means (not shown) which produces a vacuum at the outer circumferential surface of the drum 22 which vacuum serves to draw the label web 17 into close and secure engagement with the surface of the drum 22. As the label web 17 is held in close and secure engagement with the surface of the drum 22 and moves at the same speed as the drum 22 there is no need to tension it and stability is assured throughout its passage past the laser unit 23. This ensures accuracy of cutting by the laser unit 23 which results in labels of high quality. Furthermore, the labels cut from the label web remain fully supported and fixed in position within the surrounding matrix of waste material on the drum 22.

The carrier sheet 18 is directed downwardly from the peel plate, around guide and tensioning rollers 19, 20 and 21 and onto a first turn bar 31. The first turn bar 31 turns the carrier sheet 18 through 90° so that it lies in a vertical plane. From the first turn bar 31 the carrier sheet 18 continues across the front of the rotating drum 22 and onto a second turn bar 32 which reverses the carrier sheet 18 back through 90° so that it again lies in a horizontal plane. After passing around the second turn bar 32 the carrier sheet 18 passes around further guide and tensioning rollers 25, 26 and 27. After the last roller 27 the carrier sheet is directed around a tamping roller 28 and onto the surface of the rotating drum 22 where it re-joins the etched label web 17. The tamping roller 28 is positioned in close contact with the surface of the rotating drum 22. The tamping roller 28 presses the carrier sheet 18 against the self-adhesive side of the etched label web 17, thus re-laminating the one with the other to form an etched label stock, indicated by the dotted line 29. The etched label stock exiting the tamping roller 28, continues around tensioning and guide rollers 30, 31 and 32, and is then wound into a roll 34. Optionally, the waste matrix, indicated by a dotted line 36 may be separated from the etched label stock 29 and wound onto a separate roll 34.

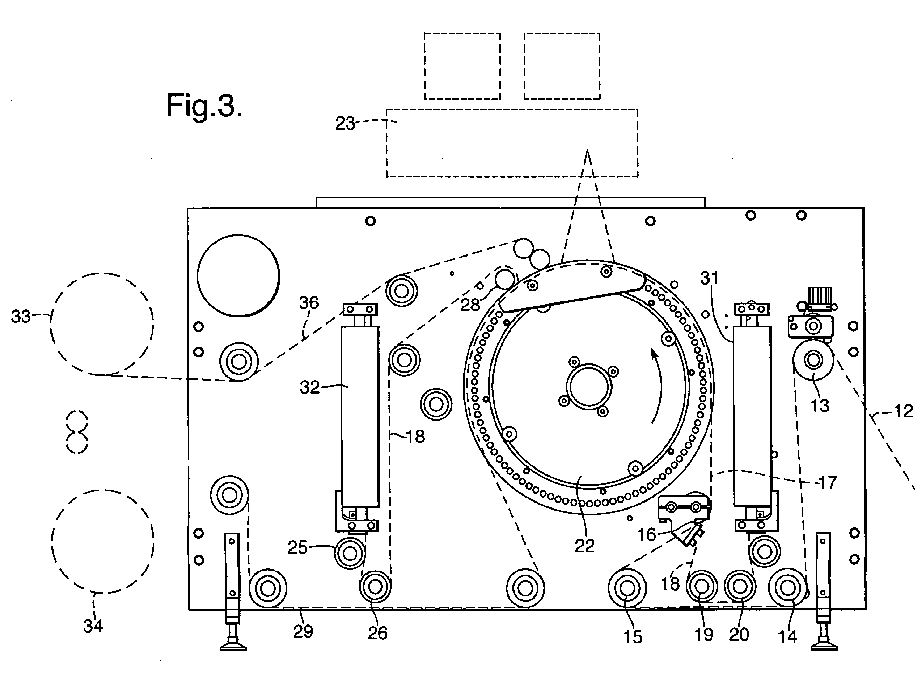

Referring to Fig. 3 of the drawings there is shown another embodiment of a label forming apparatus according to the present invention. This embodiment is essentially the same as the embodiment shown in and described with reference to Fig. 2 except that the waste matrix 36 is removed before the etched labels are re-laminated onto the carrier sheet 18.

The apparatus according to the present invention described with reference to Figs. 2 and 3 comprises a rotating drum to support the label web past the laser unit for the purpose of cutting labels therefrom. Other supporting means may be envisaged within the scope of the present invention. For example, the supporting means may comprise a reciprocating platform which traverses back and forth past the laser unit. The reciprocating platform picks up the label web following the de-lamination position and supports it past the laser unit. After the label web has been cut and prior to re-lamination the reciprocating platform disengages from the cut label web and returns to its initial position to rejoin the label web. This reciprocating action is carried out for each laser cutting operation. As a further alternative to the rotating drum the moving support means may take the form of a continuous conveyor belt. Both the reciprocating platform and the continuous conveyor belt may be provided with vacuum means to create a vacuum at the surface thereof supporting the label web and ensure that the label web is held in close and secure contact therewith.

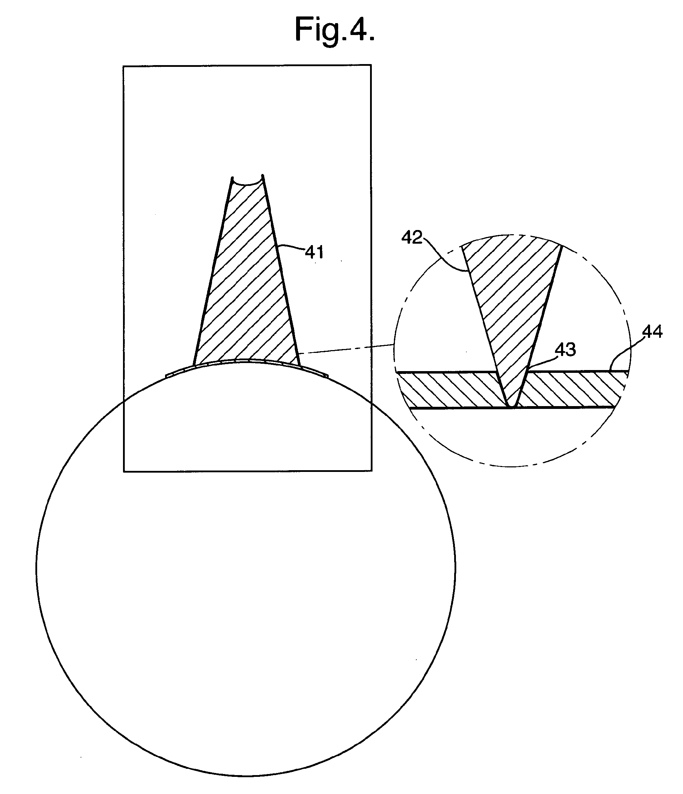

An important feature of the label forming apparatus according to the present invention which can be appreciated from Fig. 2 is that the self-adhesive label web 17 passes around the rotating drum 22 and past the laser unit 23 with the front surface, that is to say the non-adhesive surface thereof, in contact with the surface of the drum 22. This ensures that the label web 17 does not adhere to any part of the apparatus as it passes between the de-lamination and re-lamination points defined by the peel plate 16 and the tamping roller 28. It is also beneficial from another standpoint. Referring to Fig. 4 of the drawings and, in particular, to the inset view therein, it can be seen that when a label web 44 is etched by a laser beam 42 more material is removed at the top surface of the label web 44 than at the bottom. As a result the sides of the label 43 are chamfered inwardly from the bottom to the top. This can cause them to be visible to the naked eye, particularly where the label web 44 is quite thick. By etching the label web through the adhesive side thereof, the chamfered edge is on the adhesive side and not on the front side, and hence is invisible when the label is applied to the surface of a product.

## Claims

1. A label forming apparatus for forming discrete adhesive labels from a continuous strip of label stock (12) consisting of a self-adhesive label web (17) and a carrier sheet (18), the apparatus comprising laser cutting means (23), means (16) for de-laminating the self-adhesive label web (17) from the carrier sheet (18) and directing the label web (17) past the laser cutting means (23) to cut a label out of the label web (17), and means (28) for re-laminating the cut label web (17) to a carrier sheet, **characterised in that** the apparatus further comprises label web support means (22) defining a surface for supporting the label web (17) as it passes the laser cutting means (23), and drive means for moving the support means (22) at the same speed as the label web (17).

2. A label forming apparatus according to claim 1, **characterised in that** the moving support means (22) comprises a rotating drum the circumferential surface of which defines the label web supporting surface.

3. A label forming apparatus according to claim 1, **characterised in that** the moving support means (22) comprises a reciprocating platform which traverses back and forth past the laser cutting means.

4. A label forming apparatus according to claim 3, **characterised in that** the reciprocating platform picks up the label web following de-lamination from the carrier sheet and disengages from the label web prior to re-lamination thereof.

5. A label forming apparatus according to claim 1, **characterised in that** the moving support means (22) comprises a continuous conveyor belt.

6. A label forming apparatus according to any preceding claim, **characterised in that** moving support means comprises vacuum means for producing a vacuum over the label web carrying surface thereof.

7. A label forming apparatus according to any preceding claim, **characterised in that** the self-adhesive label web is supported on the moving support means with the front surface thereof in contact with the label web supporting surface thereof and the self-adhesive side thereof facing towards the laser cutting means.
